# EUROPEAN PATENT APPLICATION

(11) **EP 1 586 862 A1**
(43) Date of publication of application: **19.10.2005**
(21) Application number: 04704371.6
(22) Date of filing: 22.01.2004
(51) Int. Cl.: G01C 21/36, G08G 1/0969

(54) **ROUTE GUIDE INFORMATION RECORDING/REPRODUCTION DEVICE**

(30) Priority: 24.01.2003 JP 2003016124
(71) Applicant: MATSUSHITA ELECTRIC INDUSTRIAL CO., LTD., Kadoma-shi, Osaka 571-8501 (JP)
(72) Inventor: OHDACHI, Eriko, Yokohama-shi, Kanagawa 2240054 (JP)
(74) Representative: Balsters, Robert
(86) International application number: PCT/JP2004/000523
(87) International publication number: WO 2004/065905

(57) **Abstract**

The present invention provides a route guidance information storing and reproducing apparatus, comprising: speech information inputting means (101) for having route guidance speech information inputted therethrough on the basis of route guidance information guiding a person along a travel route from a starting point to a destination; brief map information inputting means (102) for having route guidance brief map information inputted therethrough on the basis of the route guidance information; route guidance information storage means (103) for storing therein the route guidance speech information and the route guidance brief map information; speech reproducing means (105) for reproducing the route guidance speech information stored in the route guidance information storage means; and display means (106) for displaying a brief map indicative of the travel route on the basis of the route guidance brief map information stored in the route guidance information storage means, thereby accurately storing and reproducing route guidance information.

## Description

### Technical Field of Invention

The present invention is related to a route guidance information storing and reproducing apparatus, and more particularly to a route guidance information storing and reproducing apparatus for storing and reproducing a travel route from a starting point to a destination.

### Background Art

Conventionally, in order to prepare route guidance information guiding a person along a travel route starting from a starting point to a destination, for example, by listening to a travel route verbally explained on the phone, an operator is required to raise the handset closer to his or her ear, and carefully take down on a notepad the travel route and landmark facilities placed along and in the vicinity of the travel route imaging the verbal explanation. Alternatively, the operator may store the route guidance information into the personal computer to be later reproduced therethrough. Up until now, there have been proposed a wide variety of conventional route guidance systems for allowing the operator to obtain route guidance information guiding a person along a travel route starting from a starting point to a destination. One typical example of the conventional route guidance systems is disclosed in Japanese Patent Application Laid-Open No. H08-221697 (page 3, FIG. 1).

In the case that an operator takes down on a notepad the complicated route guidance information, a drawback is encountered that the notepad tends to run short of room resulting from the fact that the operator takes down the travel route and landmark facilities placed along and in the vicinity of the travel route merely imaging the verbal explanation without having a full picture view of the route guidance information in advance. In addition, another drawback is encountered that the operator tends to fail to take down any of the landmark facilities such as, for example, names of intersections, facilities, and the like, placed along and in the vicinity of the travel route, and accordingly the route guidance information becomes inaccurate to guide the person to the destination resulting from the fact that the operator cannot keep up with the speaking speed. On the other hand, in the case that the operator stores the route guidance information into the personal computer to be later reproduced therethrough, a drawback is encountered that the operations of storing and reproducing the route guidance information become complex and cumbersome. Further, the conventional route guidance system encounters a drawback that the operator is required to pay a service fee and a communication fee, thereby bringing a high cost.

The present invention is made with a view to overcoming the previously mentioned drawbacks. It is therefore an object of the present invention to provide a route guidance information storing and reproducing apparatus for accurately storing and reproducing route guidance information with easy operation at a low cost even though the route guidance information is complex and verbally explained by outside person.

### Disclosure of the Invention

In accordance with one aspect of the present invention, there is provided a route guidance information storing and reproducing apparatus, comprising: speech information inputting means for having route guidance speech information inputted therethrough on the basis of route guidance information guiding a person along a travel route from a starting point to a destination; brief map information inputting means for having route guidance brief map information inputted therethrough on the basis of the route guidance information; route guidance information storage means for storing therein the route guidance speech information and the route guidance brief map information; speech reproducing means for reproducing the route guidance speech information stored in the route guidance information storage means; and display means for displaying a brief map indicative of the travel route on the basis of the route guidance brief map information stored in the route guidance information storage means.

In accordance with the above construction, the route guidance information storing and reproducing apparatus thus constructed can combine the route guidance speech information and the route guidance brief map information to store therein and reproduce the route guidance information guiding a person along a travel route from a starting point to a destination, thereby accurately storing and reproducing the route guidance information with easy operation at a low cost even though the route guidance information is complex and verbally explained by outside person.

Further, the route guidance information storing and reproducing apparatus according to the present invention may comprise: speech signal receiving means for receiving first route guidance speech information by wireless; and speech inputting means for inputting second route guidance speech information by voice; and in which the speech information inputting means is operative to have at least one of the first route guidance speech information and the second route guidance speech information inputted therethrough.

In accordance with the above construction, the route guidance information storing and reproducing apparatus thus constructed can store therein at least one of the first route guidance speech information and the second route guidance speech information, for example, route guidance speech information from at least one of a party transmitting the route guidance information and a party receiving the route guidance information.

Still further, the route guidance information storing and reproducing apparatus according to the present invention may comprise transmitting means for transmitting the route guidance brief map information stored in the route guidance information storage means to some other apparatus.

In accordance with the above construction, the route guidance information storing and reproducing apparatus thus constructed can transmit the route guidance brief map information stored in the route guidance information storage means to some other apparatus.

Yet further, in the route guidance information storing and reproducing apparatus according to the present invention, the transmitting means may be operative to transmit the route guidance speech information stored in the route guidance information storage means.

In accordance with the above construction, the route guidance information storing and reproducing apparatus thus constructed can transmit the route guidance speech information stored in the route guidance information storage means.

Yet further, in the route guidance information storing and reproducing apparatus according to the present invention, the display means may include a magnification modification section for modifying the contraction scale of the brief map.

In accordance with the above construction, the route guidance information storing and reproducing apparatus thus constructed can have the magnification modification section modify the contraction scale of the brief map

Yet further, in the route guidance information storing and reproducing apparatus according to the present invention, the display means may include a scrolling section for scrolling the brief map.

In accordance with the above construction, the route guidance information storing and reproducing apparatus thus constructed can have the scrolling section scroll the brief map.

In accordance with another aspect of the present invention, there is provided a route guidance information storing and reproducing system, comprising a route guidance information storing and reproducing apparatus, comprising: speech information inputting means for having route guidance speech information inputted therethrough on the basis of route guidance information guiding a person along a travel route from a starting point to a destination; brief map information inputting means for having route guidance brief map information inputted therethrough on the basis of the route guidance information; route guidance information storage means for storing therein the route guidance speech information and the route guidance brief map information; speech reproducing means for reproducing the route guidance speech information stored in the route guidance information storage means; and display means for displaying a brief map indicative of the travel route on the basis of the route guidance brief map information stored in the route guidance information storage means, and a communication apparatus comprising transmitting means for transmitting route guidance speech information to the speech information inputting means of the route guidance information storing and reproducing apparatus.

In accordance with the above construction, the route guidance information storing and reproducing system thus constructed can combine the route guidance speech information and the route guidance brief map information to store therein and reproduce the route guidance information guiding a person along a travel route from a starting point to a destination, thereby accurately storing and reproducing the route guidance information with easy operation at a low cost even though the route guidance information is complex and verbally explained by outside person.

In accordance with another aspect of the present invention, there is provided a route guidance information storing and reproducing method, comprising: a speech information inputting step of inputting route guidance speech information on the basis of route guidance information guiding a person along a travel route from a starting point to a destination; a brief map information inputting step of inputting route guidance brief map information on the basis of the route guidance information; a route guidance information storage step of storing therein the route guidance speech information and the route guidance brief map information; and a speech reproducing step of reproducing the route guidance speech information stored in the route guidance information storage step.

In accordance with the above method, in the speech reproducing step, the route guidance speech information and the route guidance brief map information stored in the route guidance information storage step can be reproduced.

In accordance with another aspect of the present invention, there is provided a route guidance information storing and reproducing method, comprising: a speech information inputting step of inputting route guidance speech information on the basis of route guidance information guiding a person along a travel route from a starting point to a destination; a brief map information inputting step of inputting route guidance brief map information on the basis of the route guidance information; a route guidance information storage step of storing therein the route guidance speech information and the route guidance brief map information; and a display step of displaying a brief map indicative of the travel route on the basis of the route guidance brief map information stored in the route guidance information storage step.

In accordance with the above method, in the display step, the brief map indicative of the travel route can be displayed on the basis of the route guidance brief map information stored in the route guidance information storage step.

In accordance with another aspect of the present invention, there is provided a route guidance information storing and reproducing program executable by a computer to perform: a speech information inputting step of inputting route guidance speech information on the basis of route guidance information guiding a person along a travel route from a starting point to a destination; a brief map information inputting step of inputting route guidance brief map information on the basis of the route guidance information; a route guidance information storage step of storing therein the route guidance speech information and the route guidance brief map information; and a speech reproducing step of reproducing the route guidance speech information stored in the route guidance information storage step.

In accordance with the above program, the speech reproducing step can be executed by a computer to reproduce the route guidance speech information stored in the route guidance information storage step.

In accordance with another aspect of the present invention, there is provided a route guidance information storing and reproducing program executable by a computer to perform: a speech information inputting step of inputting route guidance speech information on the basis of route guidance information guiding a person along a travel route from a starting point to a destination; a brief map information inputting step of inputting route guidance brief map information on the basis of the route guidance information; a route guidance information storage step of storing therein the route guidance speech information and the route guidance brief map information; and a display step of displaying a brief map indicative of the travel route on the basis of the route guidance brief map information stored in the route guidance information storage step.

In accordance with the above program, the display step can be executed by a computer to display a brief map indicative of the travel route on the basis of the route guidance brief map information stored in the route guidance information storage step.

Further, in the route guidance information storing and reproducing program, the speech information inputting step may have a step of inputting speech information from at least one of a party transmitting the route guidance information and a party receiving the route guidance information.

In accordance with the above program, an operation can be executed by a computer to store route guidance speech information from at least one of a party transmitting the route guidance information and a party receiving the route guidance information can be stored.

### Brief Description of the Drawings

The features and advantage of a route guidance information storing and reproducing apparatus according to the present invention will become apparent as the description proceeds when taken in conjunction with the accompanying drawings.
FIG. 1 is a block diagram showing a first embodiment of a route guidance information storing and reproducing apparatus according to the present invention.
FIG. 2 is a flow chart showing the flow of storing processes performed by the first embodiment of the route guidance information storing and reproducing apparatus according to the present invention.
FIG 3 is a flow chart showing the flow of reproducing processes performed by the first embodiment of the route guidance information storing and reproducing apparatus according to the present invention.
FIG. 4 is an illustration showing an example of a cellular mobile phone forming part of the first embodiment of the route guidance information storing and reproducing apparatus according to the present invention.
FIG. 5 is an illustration showing a functional example of numerical keys of the cellular mobile phone forming part of the first embodiment of the route guidance information storing and reproducing apparatus according to the present invention shown in FIG. 4.
FIG. 6 is an illustration showing a setting example of the numerical keys of the cellular mobile phone forming part of the first embodiment of the route guidance information storing and reproducing apparatus according to the present invention shown in FIG. 4.
FIG. 7 is an illustration showing an example of combination of the numerical keys of the cellular mobile phone forming part of the first embodiment of the route guidance information storing and reproducing apparatus according to the present invention shown in FIG 4.
FIG. 8 is an illustration showing storing processes using the combination of the numerical keys of the cellular mobile phone forming part of the first embodiment of the route guidance information storing and reproducing apparatus according to the present invention shown in FIG 4.
FIG 9 is a schematic diagram showing a route displayed by display means.
FIG. 10 is a schematic diagram showing a route displayed by display means.
FIG 11 is a block diagram showing a second embodiment of a route guidance information storing and reproducing apparatus according to the present invention.
FIG. 12 is a flow chart showing the flow of storing processes performed by the second embodiment of the route guidance information storing and reproducing apparatus according to the present invention.
FIG 13 is a flow chart showing the flow of transmitting processes performed by the second embodiment of the route guidance information storing and reproducing apparatus according to the present invention.

### Best mode of carrying out the present invention

The preferred embodiments of the present invention will be described hereinafter with reference to the drawings.

### (A first preferred embodiment)

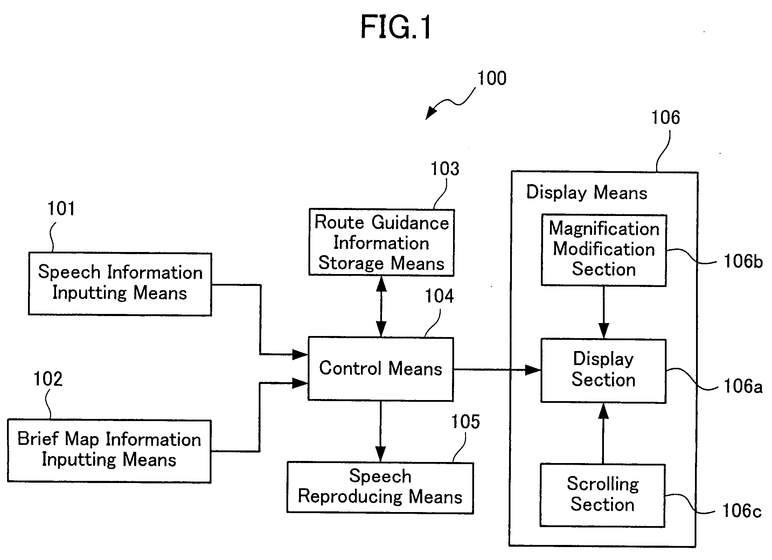

The construction of a first embodiment of a route guidance information storing and reproducing apparatus according to the present invention will be described first. The present embodiment of the route guidance information storing and reproducing apparatus is shown to bear a reference numeral 100 in FIG. 1 and comprises: speech information inputting means 101 for having route guidance speech information inputted therethrough on the basis of route guidance information guiding a person along a travel route from a starting point to a destination, brief map information inputting means 102 for having route guidance brief map information inputted therethrough on the basis of the route guidance information, route guidance information storage means 103 for storing therein the route guidance speech information and the route guidance brief map information, control means 104 for control the whole operation of the apparatus, speech reproducing means 105 for reproducing the route guidance speech information stored in the route guidance information storage means 103, and display means 106 for displaying a brief map indicative of the travel route on its screen on the basis of the route guidance brief map information stored in the route guidance information storage means 103. The display means 106 includes a display section 106a constituted by, for example, a screen for displaying a brief map thereon, a magnification modification section 106b for modifying the contraction scale of the brief map displayed on its screen, and a scrolling section 106c for scrolling the brief map displayed on its screen.

The route guidance information herein used is intended to mean information indicative of procedures to guide a person along a travel route from a starting point to a destination, and includes information on landmark facilities placed along and in the vicinity of the travel route for the purpose of assisting in understanding about the travel route. The route guidance speech information herein used is intended to mean a speech indicative of the route guidance information. The route guidance brief map information herein used is intended to mean information to be used for making a brief map including information such as, for example, "go straight", "turn right" and "turn left", landmark facilities, and the like, guiding a person along the travel route from the starting point to the destination.

The speech information inputting means 101 is constituted by, for example, a microphone, a speech signal amplifying circuit, and the like, and adapted to allow an operator to input the route guidance speech information therethrough. The brief map information inputting means 102 is constituted by an input device such as, for example, a key board, a touch panel, a tablet, or the like, and adapted to allow an operator to input numerals, characters, symbols, and the like indicative of the route guidance brief map information therethrough. In the present invention, it is assumed that the brief map information inputting means 102 is constituted by a key board including a storing start key for inputting therethrough a storing start signal to have the route guidance information storing and reproducing apparatus 100 start a storing operation of storing the route guidance information therein, a speech storing start key for inputting therein a speech storing start signal to have the route guidance information storing and reproducing apparatus 100 start a speech storing operation of storing the route guidance speech information therein, speech storing end key for inputting therethrough a storing end signal to have the route guidance information storing and reproducing apparatus 100 end the speech storing operation, a plurality of direction keys for respectively inputting therethrough symbols indicative of "go straight", "turn right" and "turn left", and directions which the landmark facilities are located in, and a whole map display key for inputting therethrough a whole map display signal to have the display means 106 display a brief map of the whole travel route.

The route guidance information storage means 103 is constituted by, for example, a semiconductor memory, a magnetic disk, a magnetic optical disk, or the like, and adapted to store therein the route guidance speech information inputted through the speech information inputting means 101 and the route guidance brief map information inputted through the brief map information inputting means 102.

The speech reproducing means 105 is constituted by, for example, a speech signal amplifying circuit, a speaker, an ear phone, and the like, and adapted to reproduce the route guidance speech information stored in the route guidance information storage means 103. The route guidance information storing and reproducing apparatus 100 further comprises a speech reproducing end key, not shown, for inputting a speech reproducing end signal to have the speech reproducing means 105 end the reproducing operation.

The display means 106 is constituted by, for example, an image processing circuit, a liquid crystal display, and the like, and adapted to display a brief map of the travel route, hereinlater referred to as a "travel route brief map". The image processing circuit may be constituted by CPU (central processing unit), ROM (read-only memory), RAM (random-access memory), and the like, and the CPU may be operative to execute various programs stored in the ROM and RAM to perform the image processing process. The display means 106 includes a magnification modification section 106b for modifying the contraction scale of the brief map displayed on its screen, for example, the liquid crystal display, and a scrolling section 106c for scrolling the brief map displayed on its screen, for example, the liquid crystal display. The display means 106 thus constructed enables an operator to modify the contraction scale of and scroll the brief map displayed on its screen by operating, for example, keys respectively corresponding to their functions. The control means 104 is constituted by, for example, CPU, ROM, RAM, and the like.

The operation of the present embodiment of the route guidance information storing and reproducing apparatus 100 will be described with reference to FIGS. 1 through 3.

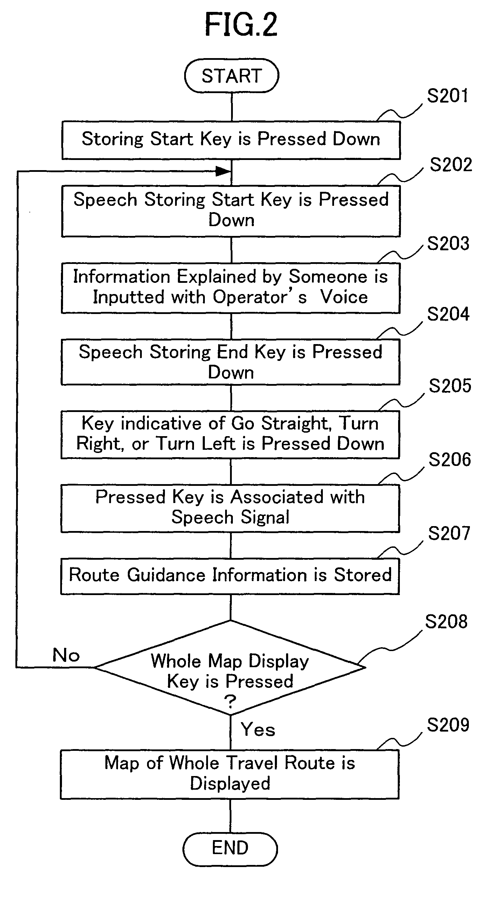

Now, the route guidance information storing processes performed by the present embodiment of the route guidance information storing and reproducing apparatus 100 will be described hereinlater with reference to FIGS. 1 and 2.

As shown in FIG. 2, firstly, the storing start key of the brief map information inputting means 102 is pressed down by the operator and the storing operation of storing the route guidance information therein is started (step S201). Then, the speech storing start key of the brief map information inputting means 102 is pressed down by the operator and the speech storing operation of storing the route guidance speech information therein is started (step S202). The speech information inputting means 101 is operated to input the route guidance speech information uttered by the operator who has listened to the verbally explained route guidance information (step S203). In this step, the route guidance information spoken up by outside person is broken up by the operator into a plurality of pieces each having an arbitrary length. The operator may break up the route guidance information into a plurality of pieces each having, for example, an intersection at which the vehicle makes a turn, a landmark facility, or the like.

The speech storing end key of the brief map information inputting means 102 is pressed down by the operator, and the speech storing operation is ended (step S204). Then, any one of the direction keys of the brief map information inputting means 102 is pressed down by the operator (step S205). This means that the any one of the direction keys indicative of go straight, turn right and turn left, and directions which the landmark facilities are located in is pressed down, and the corresponding information is inputted therethrough.

The control means 104 is operated to associate the pressed direction key indicative of go straight, turn right or turn left, or a direction which the landmark facility is located in with the route guidance speech information inputted by the speech information inputting means 101 (step S206). The route guidance information storage means 103 is operated to store therein the route guidance speech information (step S207). The control means 104 is operated to judge whether or not the whole map display key of the brief map information inputting means 102 is pressed down (step S208). When it is judged in the step S208 that the whole map display key is pressed down, the display means 106 is operated to display the brief map of the whole travel route (step S209). When it is, on the other hand, judged that the whole map display key is not pressed down, the step S208 goes back to the step S202.

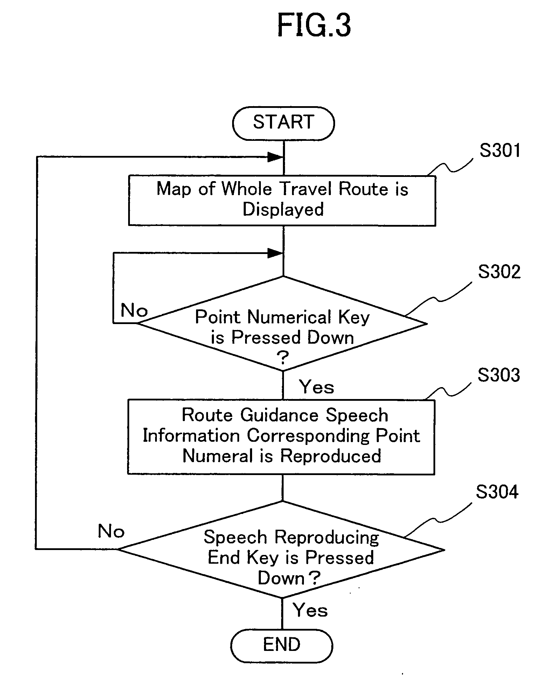

Now, the route guidance information reproducing processes performed by the present embodiment of the route guidance information storing and reproducing apparatus 100 will be described hereinlater with reference to FIGS. 1 and 3.

As shown in FIG 3, firstly, the whole map display key of the brief map information inputting means 12 is pressed down by the operator and the brief map of the whole travel route is displayed on the display section 106a (step S301). Then, the control means 104 is operated to judge whether or not a point numerical key is pressed down. The point numeral herein used is intended to mean a numeral indicative of a point on a travel route. The control means 104 is adapted to assign a point numeral to each of the pieces of the route guidance information broken up in the aforementioned step S203. The point numerical key herein used is intended to mean a numerical key for specifying a point numeral on the travel route.

When it is judged in the step S302 that the point numerical key is pressed, the speech reproducing means 105 is operated to reproduce the route guidance speech information corresponding to the point numeral (step S303). When it is, on the other hand, judged that the point numerical key is not pressed, the control goes back to the step S302. The step S303 goes forward to the step S304, in which the control means 104 is operated to judge whether or not the speech reproducing end key is pressed down. When it is judged that the speech reproducing end key is pressed down in the step S304, the step S304 goes to END, in which the speech reproducing means 105 end the reproducing operation. When it is, on the other hand, judged in the step S304 that the speech reproducing end key is not pressed down, the step S304 goes back to the step S301.

The step S203 constitutes a speech information inputting step, the step S205 constitutes a brief map information inputting step, the step S207 constitutes a route guidance information storage step, the step S209 and the step S301 collectively constitute a display step, and the step S303 constitute a speech reproducing step.

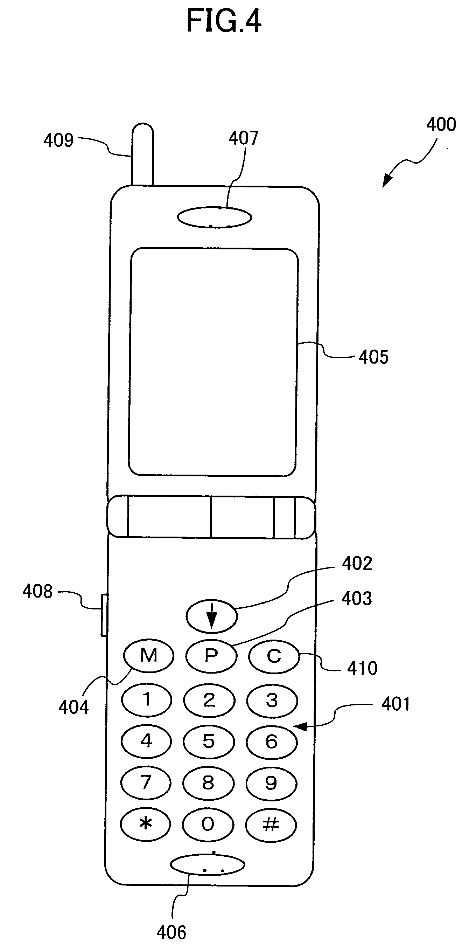

The description hereinlater will be directed to each of the steps previously described and shown in FIGS. 2 and 3 in detail with reference to FIG. 4 and FIG. 5 through 8. FIG 4 is an illustration showing an example of a cellular mobile phone forming part of the present embodiment of the route guidance information storing and reproducing apparatus 100.

The cellular mobile phone is shown in FIG 4 to bear a reference numeral 400 and comprises a plurality of numerical keys 401 for inputting key signals respectively indicative of numerals "0" to "9", a power-on key 403 for selectively powering-on and powering-off the cellular mobile phone 400, and a mode selection key 404 for selecting one mode from among a plurality of modes including a telephone mode, a route guidance information storing mode, a route guidance information reproducing mode, and the like. The cellular mobile phone 400 further comprises a liquid crystal display 405 for displaying a travel route thereon, an arrow key 402 for modifying the contraction scale of the travel route brief map displayed on the liquid crystal display 405, or scrolling the travel route brief map displayed on the liquid crystal display 405, a microphone 406, a speaker 407, an earphone terminal 408 for having an earphone, not shown, connected thereto, an antenna 409, and a clear key 410 for clearing the stored contents inputted through the keys. The numerical keys 401 and the arrow key 402 constitute brief map information inputting means 102.

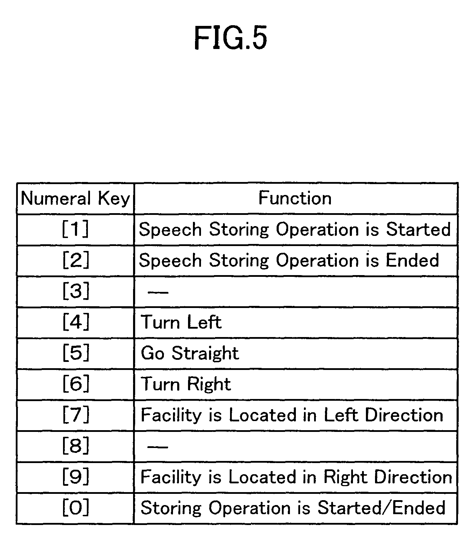

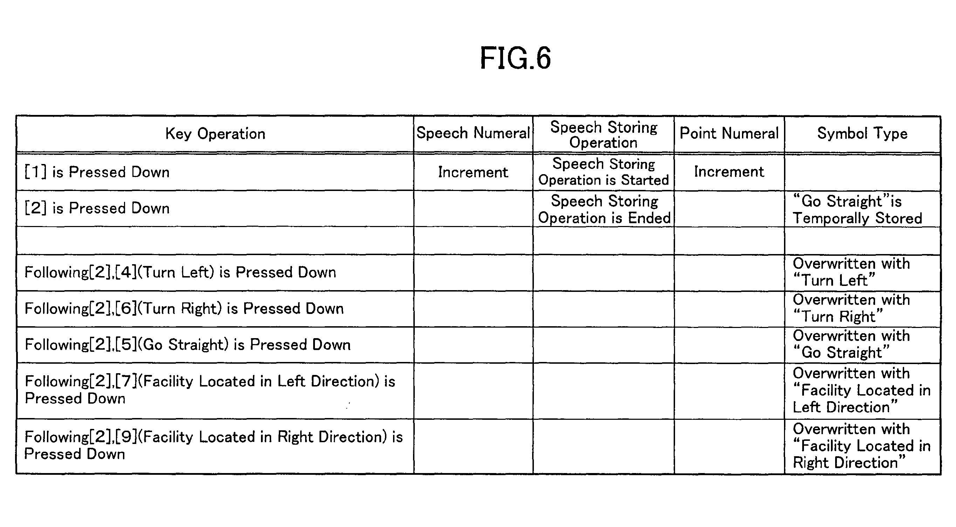

In the present embodiment, the numerical keys 401 of the cellular mobile phone 400 are designed to input key signals respectively corresponding to functions as shown in FIG. 5. For example, the pressed-down action of the numerical key [1] causes to start a speech storing operation of storing the route guidance speech information, and the pressed-down action of the numerical key [2] causes to end the speech storing operation. The pressed-down actions of the numerical keys [4], [5], and [6] respectively cause to input signals indicative of turn left, go straight, and turn right. The pressed-down action of the numerical key [7] causes to input a signal indicating that a landmark facility is located in a left direction while, on the other hand, the pressed-down action of the numerical key [9] causes to input a signal indicating that a landmark facility is located in a right direction. The landmark facility or the facility herein used is intended to mean a facility, a building, or the like, located along and in the vicinity of the travel route. The pressed-down action of the numerical key [0] causes to start or end the storing operation of storing the route guidance information. The symbol [/] appearing in FIG. 5 and FIG 6 or later is intended to mean "or".

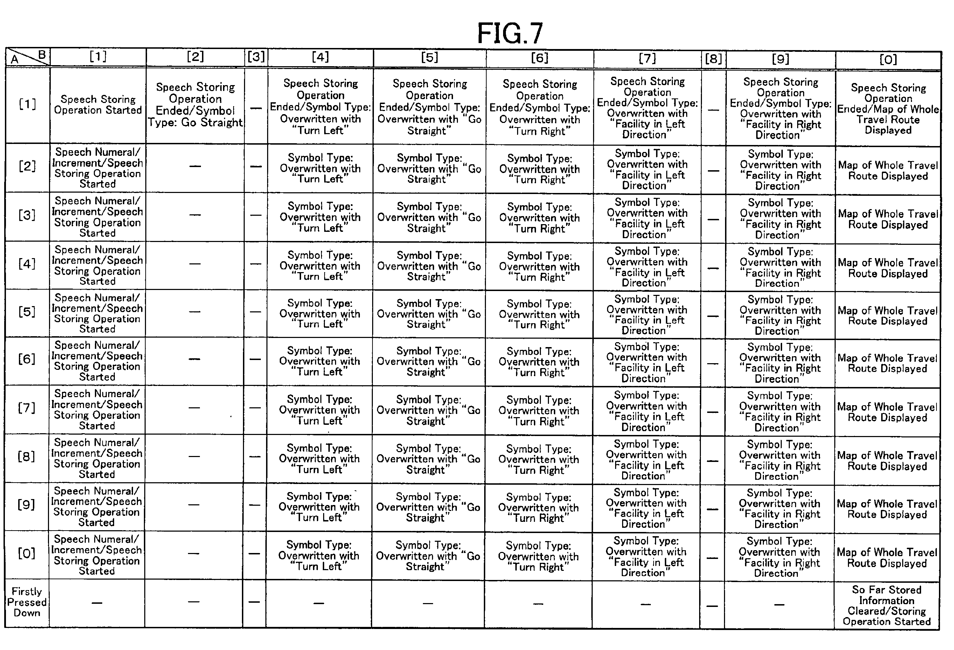

The description hereinlater will be directed to functions corresponding to the numerical keys 401 in the route guidance information storing step with reference to FIGS. 6 and 7. As shown in FIG. 6, for example, the pressed-down action of the numerical key [1] causes to start the speech storing operation, incrementing a speech numeral and a point numeral by one. The speech numeral herein used is intended to mean a numeral assigned by the control means 104 to each of the pieces of the route guidance speech information stored in the route guidance information storage means 103. Furthermore, a plurality of numerical keys are used for specifying each one of symbol types. For example in the case that the numerical keys [2] and [4] are successively pressed down, the first pressed-down action of the numeral key [2] causes to end the speech storing operation, and then temporally store a symbol type "go straight", and the second pressed-down action of the numeral key [4] causes to overwrite the symbol type with a symbol type "turn right".

FIG. 7 shows a table showing an example of combinations of the numerical keys and their corresponding functions. The functions shown in FIG. 7 correspond to combinations of the numerical keys under the condition that the numerical key A is firstly pressed down and then the numerical key B is pressed down. This means that the function is activated under the condition that the numerical key B is pressed down after the condition that the numerical key A is pressed down. For example in the case that the numerical key [1] is pressed down, and then the numeral key [5] is pressed down, the speech storing operation is ended and its symbol type is overwritten with a symbol type "go straight". The symbol type herein used is intended to mean a type of symbol contained in the route guidance brief map information, and include "go straight", "turn right", "turn left", information on landmark facilities, or the like. Furthermore, as shown in FIG 7, in the case that the numerical key [0] is firstly pressed down, all the information temporally stored is cleared and another storing operation of storing new route guidance information is started.

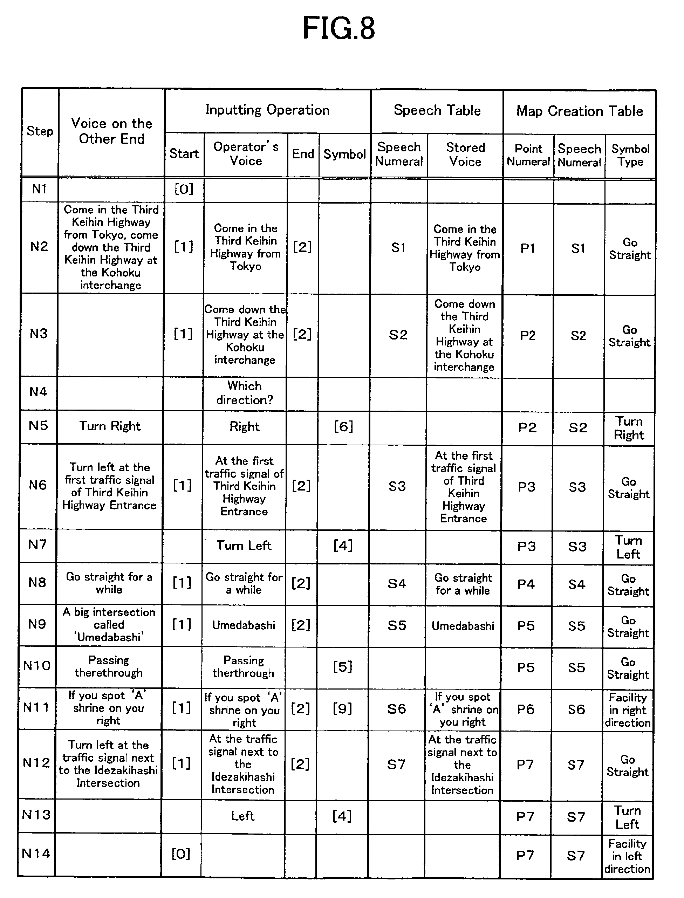

Then, the route guidance information storing processes performed by the aforementioned cellular mobile phone 400 will be described in detail hereinlater with reference to FIG 8.

The storing processes shown in FIG. 8 are directed to the case that the travel route is verbally explained on the phone, the route guidance speech information and the route guidance brief map information are inputted on the basis of the verbal explanation, and a speech table and a map creation table are created in, for example, the RAM of the control means 104 during the storing processes. It is assumed hereinlater that the travel route starting from a starting point, for example, Tokyo to a destination is verbally explained by someone on the phone as follows, "Come in the Third Keihin Highway from Tokyo, come down the Third Keihin Highway at the Kohoku interchange, turn right, and turn left at the first traffic signal of Third Keihin Highway Entrance, go straight for a while. A big intersection called 'Umedabashi', passing therethrough. If you spot the 'A' shrine on your right, turn left at the traffic signal next to the Idezakihashi Intersection." The verbal explanation, i.e., route guidance information is notified to the operator through the speaker 407 or an earphone connected to the earphone terminal 408 of the cellular mobile phone 400.

As shown in FIG 8, the operator presses down the numerical key [0] to start the storing operation of storing the route guidance information (step N1). In response to the route guidance information verbally explained, i.e., "Come in the Third Keihin Highway from Tokyo, come down the Third Keihin Highway at the Kohoku interchange", the operator presses down the numerical key [1], speaks up, "Come in the Third Keihin Highway from Tokyo" to be inputted through the speech information inputting means 101, and presses down the numerical key [2] (step N2). The control means 104 is operated to assign a speech numeral S1 in the speech table to the route guidance speech information "Come in the Third Keihin Highway from Tokyo". The control means 104 is further operated to assign a point numeral P1 in the map creation table to the speech numeral S1 and the symbol type "go straight".

Subsequently, the operator presses down the numerical key [1], speaks up, "Come down the Third Keihin Highway at the Kohoku interchange" to be inputted through the speech information inputting means 101, and presses down the numerical key [2] (step N3). The control means 104 is operated to increment the speech numeral from S1 to S2, and assign the speech numeral S2 in the speech table to the route guidance speech information "Come down the Third Keihin Highway at the Kohoku interchange". The control means 104 is further operated to increment the point numeral from P1 to P2, and assign the point numeral P2 in the map creation table to the speech numeral S2 and the symbol type "go straight".

The step N3 goes forward to the step N4, in which the operator utters "Which direction?". In this step, the speech table and the map creation table remain unchanged because of the fact that the operator does not operate any key.

In response to the route guidance information verbally explained, i.e., "Turn right", the operator speaks up "Right", and presses down the numerical key [6] (step N5). The control means 104 is operated to assign the numeral point P2 in the map creation table to the speech numeral S2 and the symbol type "turn right". In this step, no speech numeral in the speech table is assigned to any new route guidance speech information because of the fact that the numerical key [6] is simply pressed down, but "Turn right" is not inputted through the speech information inputting means 101. This leads to the fact that the speech numeral and the point numeral are not incremented, but remain the same as S2 and P2, respectively in the step N5.

In response to the route guidance information verbally explained, i.e., "Turn left at the first traffic signal of Third Keihin Highway Entrance", the operator presses down the numerical key [1], speaks up, "At the first traffic signal of Third Keihin Highway Entrance" to be inputted through the speech information inputting means 101, and presses down the numerical key [2] (step N6). The control means 104 is operated to increment the speech numeral from S2 to S3, and assign the speech numeral S3 in the speech table to the route guidance speech information "At the first traffic signal of Third Keihin Highway Entrance". The control means 104 is further operated to increment the point numeral from P2 to P3, and assign the point numeral P3 in the map creation table to the speech numeral S3 and the symbol type "go straight".

Furthermore, the operator speaks up "Turn left", and presses down the numerical key [4] (step N7). The control means 104 is operated to assign the numeral point 3 in the map creation table to the speech numeral S3 and the symbol type "turn left".

In response to the route guidance information verbally explained, i.e., "Go straight for a while", the operator presses down the numerical key [1], speaks up, "Go straight for a while" to be inputted through the speech information inputting means 101, and presses down the numerical key [2] (step N8). The control means 104 is operated to increment the speech numeral from S3 to S4, and assign the speech numeral S4 in the speech table to the route guidance speech information "Go straight for a while". The control means 104 is further operated to increment the point numeral from P3 to P4, and assign the point numeral P4 in the map creation table to the speech numeral S4 and the symbol type "go straight".

In response to the route guidance information verbally explained, i.e., "A big intersection called 'Umedabashi"', the operator presses down the numerical key [1], speaks up, "Umedabashi" to be inputted through the speech information inputting means 101, and presses down the numerical key [2] (step N9). The control means 104 is operated to increment the speech numeral from S4 to S5, and assign the speech numeral S5 in the speech table to the route guidance speech information "Umedabashi". The control means 104 is further operated to increment the point numeral from P4 to P5, and assign the point numeral P5 in the map creation table to the speech numeral S5 and the symbol type "go straight".

In response to the route guidance information verbally explained, i.e., "Passing therethrough", the operator speaks up "Passing therethrough", and presses down the numerical key [5] (step N10). The control means 104 is operated to assign the numeral point P5 in the map creation table to the speech numeral S5 and the symbol type "Passing therethrough".

In response to the route guidance information verbally explained, i.e., "If you spot the 'A' shrine on your right", the operator presses down the numerical key [1], speaks up, "If you spot the 'A' shrine on your right" to be inputted through the speech information inputting means 101, and presses down the numerical keys [2] and [9] (step N11). The control means 104 is operated to increment the speech numeral from S5 to S6, and assign the speech numeral S6 in the speech table to the route guidance speech information "If you spot the 'A' shrine on your right". The control means 104 is further operated to increment the point numeral from P5 to P6, and assign the point numeral P6 in the map creation table to the speech numeral S6 and the symbol type "facility in a right direction".

In response to the route guidance information verbally explained, i.e., "turn left at the traffic signal next to the Idezakihashi Intersection", the operator presses down the numerical key [1], speaks up, "turn left at the traffic signal next to the Idezakihashi Intersection" to be inputted through the speech information inputting means 101, and presses down the numerical key [2] (step N12). The control means 104 is operated to increment the speech numeral from S6 to S7, and assign the speech numeral S7 in the speech table to the route guidance speech information "turn left at the traffic signal next to the Idezakihashi Intersection". The control means 104 is further operated to increment the point numeral from P6 to P7, and assign the point numeral P7 in the map creation table to the speech numeral S7 and the symbol type "go straight".

Furthermore, the operator speaks up "Turn left" to be inputted through the speech information inputting means 101, and presses down the numerical key [4] (step N13). The control means 104 is operated to assign the numeral point P7 in the map creation table to the speech numeral S7 and the symbol type "Turn left".

The operator presses down the numerical key [0] to end the storing operation (step N14). The control means 104 is operated to assign the numeral point P7 in the map creation table to the speech numeral S7 and the symbol type "facility in a left direction". The description hereinlater will be directed to the reason whey the point numeral P7 is assigned the symbol type "facility in a left direction" in the step N14 even thought the point numeral P7 has been assigned to the symbol type "Turn left" in the step N13. The brief map of the whole travel route is displayed, and the storing operation is ended in the step N14 as shown in FIG. 7 because of the fact that the numerical keys [4] and [0] are pressed down in the steps N13 and N14. This means that the point numeral P7 becomes the last point numeral, and it is herein assumed that the vehicle has reached his or her destination. This leads to the fact that the symbol type assigned to the point numeral P7, i.e., "Turn left" is change to the symbol type "facility in a left direction".

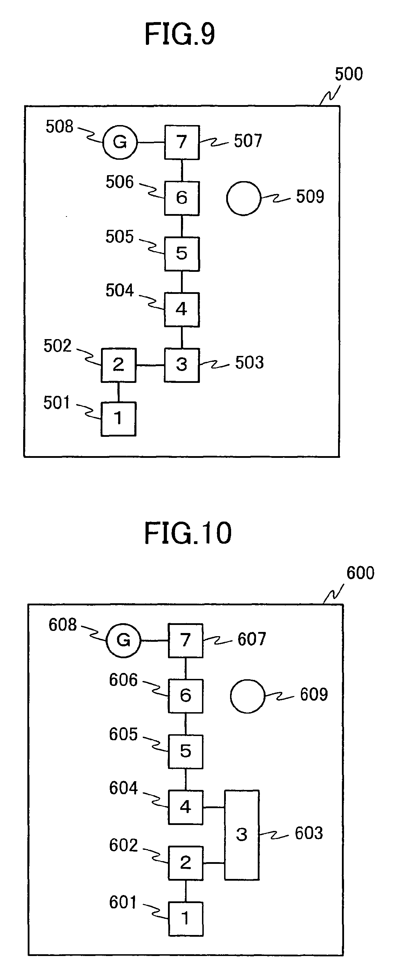

In FIG. 9, there is shown an example of the brief map of the whole travel route displayed in the step N14. The travel route brief map 500 displayed on the liquid crystal display 405 includes point numerals P1 to P7 respectively represented by the numerals 501 to 507, a destination symbol "G" represented by a numeral 508, and a facility symbol placed in the right direction of the point numeral P6, represented by a numeral 509.

As shown in FIG. 3, the operator presses down, for example, the numerical key [2], the speech, i.e., route guidance speech information "Come down the Third Keihin Highway at the Kyohoku interchange" assigned to the point numeral P2 is reproduced. From this speech, the operator can tell that the point numeral P2 represented by the numeral 502 on the travel route brief map 500 is indicative of the Kohoku interchange, and the person is recommended to come down at the Kohoku interchange, and turn right. Furthermore, the operator presses down, for example, the numerical key [6], the speech, i.e., route guidance speech information "If you spot the 'A' shrine on your right" assigned to the point numeral P6 represented by the numeral 506 is reproduced. From this speech, the operator can tell that the facility symbol placed in the right direction of the point numeral P6, represented by a numeral 509, is indicative of the "A" shrine.

According to the present invention, all of the pieces of the route guidance speech information may be automatically reproduced in order of the point numerals P1 to P7. In addition, the travel route brief map 500 displayed on the liquid crystal display 405 may be modified in contraction scale using the arrow key 402 constituting a magnification modification section 106b. Further, the travel route brief map 500 displayed on the liquid crystal display 405 may be scrolled using the arrow key 402 constituting a scroll section 106c. Still further, according to the present invention, the arrow key 402 may be operative to assume two operation modes including a magnification modifying mode in which the arrow key 402 is operative to modify the contraction scale of the travel route brief map 500 displayed on the liquid crystal display 405, and a scrolling mode in which the arrow key 402 is operative to scroll the travel route brief map 500 displayed on the liquid crystal display 405, and the mode selecting key 404 may be operative to select one mode from among the magnification modifying mode and the scrolling mode.

In FIG. 10, there is shown another example of the brief map of the whole travel route displayed in the step N14. The travel route brief map 600 shown in FIG. 10 is different from the aforementioned travel route brief map 500 shown in FIG 9 in the point numeral P3 represented by the numeral 603. The travel map brief map 600 shown in FIG. 10 is displayed on the liquid crystal display 405 in a manner that the route guidance speech information such as, for example, "go straight", "turn right", "turn left", "turn obliquely right", and the like, can be accurately visualized while, on the other hand, the travel map brief map 500 shown in FIG. 9 is displayed simply in a similar manner to the route map. The travel map brief map 600 shown in FIG 10 can assist the operator in imaging a driving direction at each of the point numerals.

As described in the above, the operator can easily understand the travel route with the help of the travel route brief map 500 displayed on the liquid crystal display 405, and the route guidance speech information reproduced in response to the numerical key displayed on the liquid crystal display 405 and pressed down by the operator. As described in the above, it is difficult to draw a detailed route map by listening to verbally explained route guidance information, and an operator can hardly manage to draw a brief map of a travel route in the conventionally way because of the fact that the operator cannot have a clear understanding of the travel route by the help of the reproduced route guidance speech information alone. The present embodiment of the route guidance information storing and reproducing apparatus 100 makes it possible for an operator to receive route guidance information to be stored therein while operating the cellular mobile phone 400. This leads to the fact that the present embodiment of the route guidance information storing and reproducing apparatus 100 can combine the route guidance speech information and the route guidance brief map information, thereby facilitating operations of storing and reproducing the route guidance information as well as overcoming the conventional drawbacks.

Though it has been described in the above that the present embodiment of the route guidance information storing and reproducing apparatus 100 is constituted by a cellular mobile phone 400, the route guidance information storing and reproducing apparatus 100 according to the present invention may be constituted by any other apparatus such as for example a terminal apparatus, a vehicle-mounted navigation apparatus, a portable navigation apparatus, or the like.

While it has been described in the above that the present embodiment of the route guidance information storing and reproducing apparatus 100 is not operative to store therein speech information indicative of a direction as shown in FIG. 8, the route guidance information storing and reproducing apparatus 100 according to the present invention may store therein speech information indicative of a direction. The route guidance information storing and reproducing apparatus 100 may store therein speech information such as, for example, "Turn left at the first traffic signal of Third Keihin Highway Entrance" spoken up in the step N6 shown in FIG. 8. In this case, the operator can later confirm the driving direction through the reproduced speech information in addition to the travel route brief map displayed on the display screen.

Further, according to the present invention, the route guidance information storing and reproducing apparatus 100 may further comprise a cancel key for canceling the previous key operation mistakenly performed by the operator. The cancel key may be constituted by, for example, a numeral key [3], a clear key 410, or the like. The pressed-down action of the cancel key causes to decrement the point numeral and the speech numeral, thereby enabling the operator to undo the previous key operation.

For example in the case that the cancel key is pressed down in the step N5 show in FIG. 8, the point numeral is decremented to P1 and the speech numeral is decremented to S1. Subsequent to the cancel key, the operator presses down the numeral key [1], speaks up, "Come down the Third Keihin Highway at the Kohoku interchange" to be inputted therethrough, and presses down the numerical key [2]. The control means 104 is operated to overwrite the route guidance speech information at the speech numeral S2 in the speech table with "Come down the Third Keihin Highway at the Kohoku interchange". Then, the point numeral P2 in the map creation table is assigned to the speech numeral S2 and the symbol type "go straight''. The operator presses down the numerical key [6] and the numeral point P2 in the map creation table is assigned to the symbol type "turn right". As will be seen from the foregoing description, the operator can undo the previous key operation in the case that the operator mistakenly operates the key.

Still further, according to the present invention, the route guidance information storing and reproducing apparatus 100 as previously described and a communication apparatus comprising transmitting means for transmitting route guidance speech information to the speech information inputting means 101 of the route guidance information storing and reproducing apparatus 100 may constitute a route guidance information storing and reproducing system. In the route guidance information storing and reproducing system, the route guidance speech information transmitted from the communication apparatus is stored and reproduced by the route guidance information storing and reproducing apparatus 100.

As will be seen from the foregoing description, it is to be understood that the present embodiment of the route guidance information storing and reproducing apparatus 100 can combine the route guidance speech information inputted through the speech information inputting means 101 and the route guidance brief map information inputted through the brief map information inputting means 102 to store and reproduce the route guidance information guiding a person along a travel route starting from a starting point to a destination, thereby accurately storing and reproducing route guidance information with easy operation at a low cost even though the route guidance information is complex and verbally explained by outside person.

### (A second preferred embodiment)

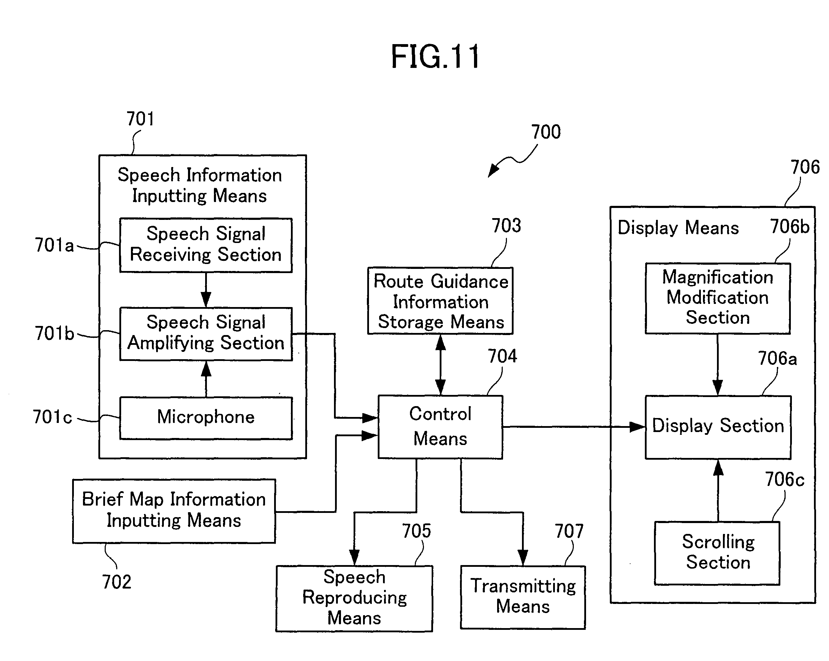

The construction of a second embodiment of a route guidance information storing and reproducing apparatus according to the present invention will be described first. The present embodiment of the route guidance information storing and reproducing apparatus is shown to bear a reference numeral 700 in FIG. 11 and comprises speech information inputting means 701 for having route guidance speech information inputted therethrough on the basis of route guidance information guiding a person along a travel route from a starting point to a destination, brief map information inputting means 702 for having route guidance brief map information inputted therethrough on the basis of the route guidance information, route guidance information storage means 703 for storing therein the route guidance speech information and the route guidance brief map information, control means 704 for control the whole operation of the apparatus, speech reproducing means 705 for reproducing the route guidance speech information stored in the route guidance information storage means 703, display means 706 for displaying a brief map indicative of the travel route on its screen on the basis of the route guidance brief map information stored in the route guidance information storage means 703, and transmitting means 707 for transmitting the route guidance speech information and the route guidance brief map information stored in the route guidance information storage means 703 to some other apparatus.

The aforementioned speech information inputting means 701 includes speech signal receiving unit 701a for receiving a speech signal indicative of route guidance speech information from outside person by, for example, a wireless telephone line, a speech signal amplifying unit 701b for amplifying the speech signal, and a microphone 701c for collecting a speech uttered by an operator to be converted to a speech signal. The display means 706 includes a display section 706a constituted by, for example, a screen for displaying a brief map thereon, a magnification modification section 706b for modifying the contraction scale of the brief map displayed on its screen, and a scrolling section 706c for scrolling the brief map displayed on its screen.

The route guidance information herein used is intended to mean information indicative of procedures to guide a person along a travel route from a starting point to a destination, and includes information on landmark facilities placed along and in the vicinity of the travel route for the purpose of assisting in understanding about the travel route. The route guidance speech information herein used is intended to mean a speech indicative of the route guidance information. The route guidance brief map information herein used is intended to mean information to be used for making a brief map including information such as, for example, "go straight", "turn right" and "turn left", landmark facilities, and the like, guiding a person along the travel route from the starting point to the destination.

The aforementioned brief map information inputting means 702 is constituted by an inputting device such as, for example, a key board, a touch panel, a tablet, or the like, and adapted to allow an operator to input numerals, characters, symbols, and the like indicative of the route guidance brief map information therethrough. In the present invention, it is assumed that the brief map information inputting means 702 is constituted by a key board including a storing start key for inputting therethrough a storing start signal to have the route guidance information storing and reproducing apparatus 700 start a storing operation of storing the route guidance information therein, a speech storing start key for inputting therein a speech storing start signal to have the route guidance information storing and reproducing apparatus 700 start a speech storing operation of storing the route guidance speech information therein, speech storing end key for inputting therethrough a storing end signal to have the route guidance information storing and reproducing apparatus 700 end the speech storing operation, a plurality of direction keys for respectively inputting therethrough symbols indicative of "go straight", "turn right" and "turn left", and directions which the landmark facilities are located in, a whole map display key for inputting therethrough a whole map display signal to have the display means 706 display the brief map of the whole travel route, an original information storing start key for inputting therethrough an original information storing start signal to have the route guidance information storing and reproducing apparatus 700 start a storing operation of storing therein original route guidance information explained by someone, and an original information reproducing key for inputting therethrough a original information reproducing signal to have the route guidance information storing and reproducing apparatus 700 reproduce the original route guidance information.

The route guidance information storage means 703 is constituted by, for example, a semiconductor memory, a magnetic disk, a magnetic optical disk, or the like, and adapted to store therein the route guidance speech information inputted through the speech information inputting means 701 and the route guidance brief map information inputted through the brief map information inputting means 702.

The speech reproducing means 705 is constituted by, for example, a speech signal amplifying circuit, a speaker, an ear phone, and the like, and adapted to reproduce the route guidance speech information stored in the route guidance information storage means 703. The display means 706 is constituted by, for example, an image processing circuit, a liquid crystal display, and the like, and adapted to display the travel route brief map, hereinlater referred to as a "travel route brief map". The display means 706 includes a magnification modification section 706b for modifying the contraction scale of the brief map displayed on its screen, for example, the liquid crystal display, and a scrolling section 706c for scrolling the brief map displayed on its screen, for example, the liquid crystal display. The display means 706 thus constructed enables an operator to modify the contraction scale of and scroll the brief map displayed on its screen by operating, for example, keys respectively corresponding to their functions. The control means 704 is constituted by, for example, CPU, ROM, RAM, and the like.

The operation of the present embodiment of the route guidance information storing and reproducing apparatus 700 will be described with reference to FIGS. 11 through 13.

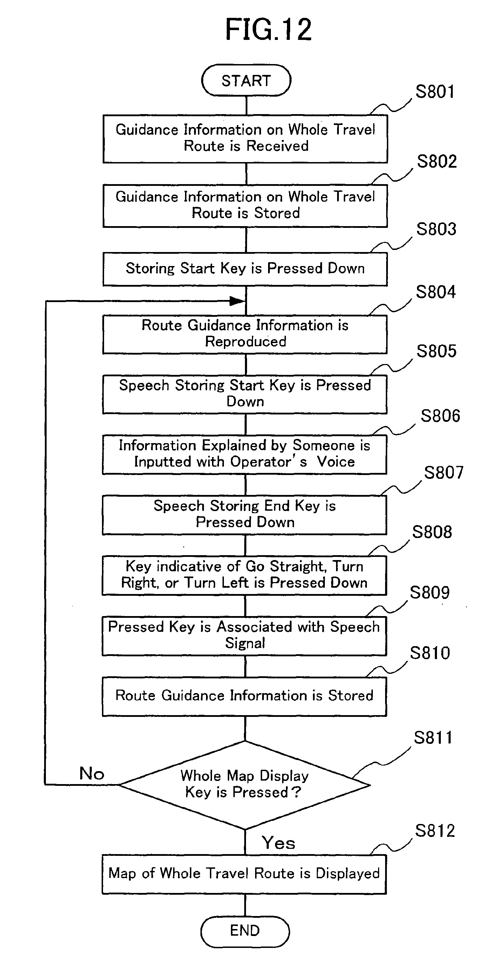

Now, the route guidance information storing processes performed by the present embodiment of the route guidance information storing and reproducing apparatus 700 will be described hereinlater with reference to FIGS. 11 and 12.

As shown in FIG 12, firstly, the speech signal receiving unit 701a is operated to receive original route guidance information, i.e., guidance information on the whole travel route from outside person by, for example, a wireless telephone line (step S801). The speech signal amplifying unit 701b is operated to amplify the speech signal, and the route guidance information storage means 703 is operated to store therein the guidance information on the whole travel route (step S802). This means that the route guidance information storage means 703 is operated to store therein the original route guidance information with a voice of the outside person. The storing start key of the brief map information inputting means 702 is pressed down by the operator and the storing operation of storing the route guidance information therein is started (step S803).

Then the speech reproducing means 705 is operated to reproduce the original route guidance information stored in the route guidance information storage means 703 (step S804). The original route guidance information reproduced in this step is the guidance information on the whole travel route stored in the previous step S802 and broken up by the operator into a plurality of pieces each having an arbitrary length. The operator may break up the route guidance information into a plurality of pieces each having, for example, an intersection at which the vehicle makes a turn, a landmark facility, or the like.

The speech storing start key of the brief map information inputting means 702 is pressed down by the operator (step S805). The microphone 701c is operated to collect route guidance information uttered by the operator on the basis of the reproduced original route guidance information (step S806). The speech storing end key of the brief map information inputting means 702 is pressed down by the operator (step S807). Then, a key such as for example a direction key of "go straight", "turn right", "turn left", or the like, is pressed down by the operator (step S808). In the present embodiment, for example, a direction key of the brief map information inputting means 702 is pressed down in this step to input therethrough information indicative of indicative of "go straight", "turn right", "turn left", a direction at which a landmark facility is located in, or the like.

The control means 704 is operated to associate the information indicative of a traveling direction, a direction in which a landmark facility is located, or the like inputted by the direction key previously pressed down with the route guidance information previously inputted through the speech information inputting means 701 (step S809). The route guidance information storage means 703 is operated to store therein the route guidance information thus associated, i.e., the route guidance speech information (step S810). The control means 704 is operated to judge whether or not the whole map display key of the brief map information inputting means 702 is pressed down (step S811). When it is judged in the step S811 that the whole map display key is pressed down, the display means 706 is operated to display the brief map of the whole travel route (step S812). When it is, on the other hand, judged that the whole map display key is not pressed down, the step S811 goes back to the step S804.

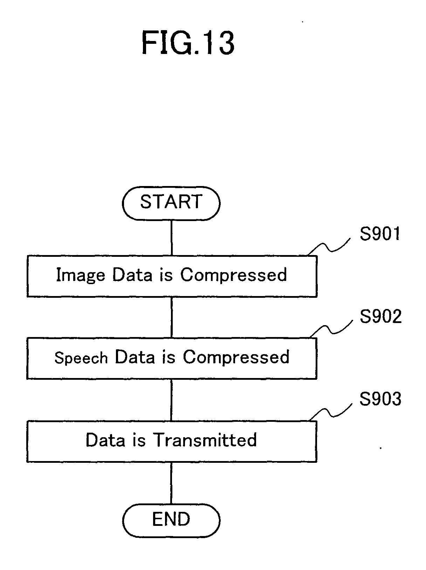

Next, route guidance information transmitting processes performed by the present embodiment of the route guidance information storing and reproducing apparatus 700 will be described hereinlater with reference to FIG. 13. As shown in FIG. 13, image data indicative of the travel route brief map crated on the basis of the route guidance brief map information stored in the route guidance information storage means 703 is compressed by the control means 704 (step S901). Then, speech data indicative of the route guidance speech information stored in the route guidance information storage means 703 is compressed by the control means 704 (step S902). The image data and the speech data thus compressed are transmitted by the transmitting means 707 to the apparatus of the person who has transmitted the original route guidance information (step S903). In the route guidance information storing and reproducing apparatus 700 thus constructed, the person who has transmitted the original route guidance information can confirm whether or not the route guidance brief map information and the route guidance speech information stored in the route guidance information storage means 703 are correct. Though it has been described in the above that the image data and the speech data are compressed before being transmitted for the purpose of reducing the size of the data, it is needless to mention that only the image data may be compressed before being transmitted, or the image data and the speech data may be transmitted without being compressed.

The route guidance information reproducing processes performed by the present embodiment of the route guidance information storing and reproducing apparatus 700 are substantially the same as those performed by the first embodiment as described with reference to FIG. 3, and therefore omitted in description thereof. The present embodiment of the route guidance information storing and reproducing apparatus 700 may be constituted by a cellular mobile phone as shown in FIG. 4, and FIGS. 5, through 8. In addition, the present embodiment of the route guidance information storing and reproducing apparatus 700 may be constituted by a terminal apparatus, a vehicle-mounted navigation apparatus, a portable navigation apparatus, or the like.

According to the present invention, the reproduced original route guidance information may be directly collected and stored in the route guidance information storage means 703 in the step S806.

The step S806 constitutes a speech information inputting step, the step S808 constitutes a brief map information inputting step, the step S810 constitutes a route guidance information storage step, and the step S812 constitutes a display step.

As will seen from the foregoing description, it is to be understood that the present embodiment of the route guidance information storing and reproducing apparatus 700 can combine the route guidance speech information inputted through the speech information inputting means 701 and the route guidance brief map information inputted through the brief map information inputting means 702 to store therein the route guidance information guiding a person along a travel route starting from a starting point to a destination, and the transmitting means 707 of the route guidance information storing and reproducing apparatus 700 can transmit the route guidance information to the person who has transmitted its original route guidance information. This leads to the fact that the route guidance information storing and reproducing apparatus 700 makes it possible for the person who has transmitted the original route guidance information to confirm whether or not the route guidance brief map information and the route guidance speech information stored in the route guidance information storage means 703 are correct and, if necessary, correct them thereby accurately storing and reproducing route guidance information with easy operation at a low cost, even though the route guidance information is complex and verbally explained by the person.

Further, the first and second embodiments of the route guidance information storing and reproducing apparatus according to the present invention may be implemented by a computer readable program executable by a computer to perform a set of method steps necessary to implement each of the above steps of the storing, reproducing, and transmitting processes.

Still further, while it has been described in the above that the brief map information inputting means bearing numeral 102 or 702 is constituted by a key board, the brief map information inputting means may be constituted by any other means as long as the route guidance information storing and reproducing apparatus 100 or 700 can input therein the route guidance brief map information. The brief map information inputting means may be constituted by, in place of the key board, means to recognize voices of the operator uttering route guidance brief map information such as "turn right", "turn left", "go straight", or the like, and have the route guidance brief map information inputted therethrough.

### Industrial Applicability

As will be seen from the foregoing description, it is to be understood that the present invention can provide a route guidance information storing and reproducing apparatus for accurately storing and reproducing route guidance information with easy operation at a low cost even though the route guidance information is complex and verbally explained by outside person.

## Claims

1. A route guidance information storing and reproducing apparatus, comprising:
speech information inputting means for having route guidance speech information inputted therethrough on the basis of route guidance information guiding a person along a travel route from a starting point to a destination;
brief map information inputting means for having route guidance brief map information inputted therethrough on the basis of said route guidance information;
route guidance information storage means for storing therein said route guidance speech information and said route guidance brief map information;
speech reproducing means for reproducing said route guidance speech information stored in said route guidance information storage means; and
display means for displaying a brief map indicative of said travel route on the basis of said route guidance brief map information stored in said route guidance information storage means.

2. A route guidance information storing and reproducing apparatus as set forth in claim 1, which further comprises:
speech signal receiving means for receiving first route guidance speech information by wireless; and
speech inputting means for inputting second route guidance speech information by voice; and in which
said speech information inputting means is operative to have at least one of said first route guidance speech information and said second route guidance speech information inputted therethrough.

3. A route guidance information storing and reproducing apparatus as set forth in claim 1 or claim 2, further comprising transmitting means for transmitting said route guidance brief map information stored in said route guidance information storage means to some other apparatus.

4. A route guidance information storing and reproducing apparatus as set forth in claim 3, in which
said transmitting means is operative to transmit said route guidance speech information stored in said route guidance information storage means.

5. A route guidance information storing and reproducing apparatus as set forth in any one of claims 1 through 4, in which
said display means includes a magnification modification section for modifying the contraction scale of said brief map.

6. A route guidance information storing and reproducing apparatus as set forth in any one of claims 1 through 5, in which
said display means includes a scrolling section for scrolling said brief map.

7. A route guidance information storing and reproducing system, comprising
a route guidance information storing and reproducing apparatus as set forth in any one of claims 1 through 6; and
a communication apparatus comprising transmitting means for transmitting route guidance speech information to said speech information inputting means of said route guidance information storing and reproducing apparatus.

8. A route guidance information storing and reproducing method, comprising:
a speech information inputting step of inputting route guidance speech information on the basis of route guidance information guiding a person along a travel route from a starting point to a destination;
a brief map information inputting step of inputting route guidance brief map information on the basis of said route guidance information;
a route guidance information storage step of storing therein said route guidance speech information and said route guidance brief map information; and
a speech reproducing step of reproducing said route guidance speech information stored in said route guidance information storage step.

9. A route guidance information storing and reproducing method, comprising:
a speech information inputting step of inputting route guidance speech information on the basis of route guidance information guiding a person along a travel route from a starting point to a destination;
a brief map information inputting step of inputting route guidance brief map information on the basis of said route guidance information;
a route guidance information storage step of storing therein said route guidance speech information and said route guidance brief map information; and
a display step of displaying a brief map indicative of said travel route on the basis of said route guidance brief map information stored in said route guidance information storage step.

10. A route guidance information storing and reproducing program executable by a computer to perform:
a speech information inputting step of inputting route guidance speech information on the basis of route guidance information guiding a person along a travel route from a starting point to a destination;
a brief map information inputting step of inputting route guidance brief map information on the basis of said route guidance information;
a route guidance information storage step of storing therein said route guidance speech information and said route guidance brief map information; and
a speech reproducing step of reproducing said route guidance speech information stored in said route guidance information storage step.

11. A route guidance information storing and reproducing program executable by a computer to perform:
a speech information inputting step of inputting route guidance speech information on the basis of route guidance information guiding a person along a travel route from a starting point to a destination;
a brief map information inputting step of inputting route guidance brief map information on the basis of said route guidance information;
a route guidance information storage step of storing therein said route guidance speech information and said route guidance brief map information; and
a display step of displaying a brief map indicative of said travel route on the basis of said route guidance brief map information stored in said route guidance information storage step.

12. A route guidance information storing and reproducing program executable by a computer as set forth in claim 10 or claim 11, in which
said speech information inputting step has a step of inputting speech information from at least one of a party transmitting said route guidance information and a party receiving said route guidance information.
